# EUROPEAN PATENT APPLICATION

(11) **EP 3 745 748 A1**
(43) Date of publication of application: **02.12.2020**
(21) Application number: 20166938.9
(22) Date of filing: 31.03.2020
(51) Int. Cl.: H04W 4/021, G01C 21/32, H04W 4/44

(54) **SERVICE PROVIDING SYSTEM, VEHICLE AND METHOD FOR PROVIDING SERVICE**

(30) Priority: 29.05.2019 JP 2019100694
(71) Applicant: TOYOTA JIDOSHA KABUSHIKI KAISHA, Toyota-shi, Aichi-ken 471-8571 (JP)
(72) Inventor: SAKURADA, Shin, Aichi-ken,, 471-8571 (JP); KIM, Sinae, Aichi-ken,, 471-8571 (JP); YANO, Takayuki, Aichi-ken,, 471-8571 (JP); YAMAMURO, Naoki, Aichi-ken,, 471-8571 (JP); HAYASHI, Takashi, Aichi-ken,, 471-8571 (JP); MIYATA, Koji, Aichi-ken,, 471-8571 (JP)
(74) Representative: J A Kemp LLP

(57) **Abstract**

A service providing system, a vehicle, and a method for providing a service are provided. The service providing system includes a server device (4) configured to provide a service to a vehicle (3) via a telecommunication line. The server device (4) includes a service map creation unit (44b) configured to acquire from the vehicle (3) information on a communication standard and a service that are being used and position information, and to create a service map indicating a communication standard and a service that are usable in a communication area at least partly based on the information on the communication standard and the service and the position information; and a vehicle control unit (44a) configured to control content of the service provided to the vehicle (3) using the service map created by the service map creation unit (44b).

## Description

### BACKGROUND OF THE INVENTION

### 1. Field of the Invention

The invention relates to a service providing system, a method for providing a service, and a vehicle.

### 2. Description of Related Art

There is a known service providing system in which a server device provides a service such as autonomous driving to a vehicle via a telecommunication line.

### SUMMARY OF THE INVENTION

According to the service providing system of the related art, there is a possibility that the service cannot be stably provided to the vehicle depending on a communication condition of the telecommunication line.

The invention provides a service providing system and a method for providing a service that can stably provide a service to a vehicle, and also provides a vehicle.

A first aspect of the invention relates to a service providing system including a server device configured to provide a service to a vehicle via a telecommunication line, the server device including: a service map creation unit configured to acquire, from the vehicle, information on a communication standard and a service that are being used and position information, and to create a service map indicating a communication standard and a service that are usable in a communication area, at least partly based on the information on the communication standard and the service and the position information; and a vehicle control unit configured to control content of the service provided to the vehicle using the service map created by the service map creation unit.

In the service providing system according to the above aspect, the vehicle control unit may be configured to notify the vehicle that autonomous driving control is not performed when it is determined, based on the service map, that the vehicle is located in a communication area where a communication standard necessary for the autonomous driving control is not allowed to be used. With the above configuration, in an area where the autonomous driving control cannot be performed, it is possible to switch the control to manual driving, for example, thereby improving the safety of the autonomous driving control.

In the service providing system according to the above aspect, the server device may be configured to provide the service to the vehicle provided with a control unit, the control unit performing, in response to notification from the server device that the autonomous driving control is not performed, the autonomous driving control using road information acquired in advance and information on surroundings of the vehicle. With the above configuration, the autonomous driving control can be continuously performed even in an area where the communication standard necessary for the autonomous driving control cannot be used.

In the service providing system according to the above aspect, the service map creation unit may be configured to receive, from the vehicle, information on a communication speed of the communication standard that is being used.

In the service providing system according to the above aspect, the service may include autonomous driving control of the vehicle; and the server device may be configured to notify the vehicle that the autonomous driving control is not performed when it is determined, based on the service map, that the vehicle travels in an area where the autonomous driving control is not allowed to be performed.

In the service providing system according to the above aspect, the server device may be configured to determine a service that is allowed to be provided in the communication area, based on the communication standard in the communication area and a communication speed of the communication standard.

In the service providing system according to the above aspect, the server device may be configured to receive, from the vehicle, feedback on whether the service has been allowed to be performed in the communication area, and determine the service that is allowed to be provided in the communication area based on the feedback.

In the service providing system according to the above aspect, the service map creation unit may be configured to determine a communication area for which the service map has not been updated for a predetermined period or more as an area where the service is not allowed to be provided.

A second aspect of the invention relates to a vehicle. The vehicle includes: a position information acquisition unit configured to acquire position information of the vehicle; a communication unit configured to communicate with a server device outside the vehicle to receive information on a service provided from the server device; and a control unit configured to acquire information on a communication standard that is being used by the communication unit. The control unit is configured to create a service map indicating a communication standard and a service that are usable in an area where the vehicle has traveled based on the position information and the information on the communication standard, and to transmit the service map to the server device through the communication unit.

A third aspect of the invention relates to a method for providing a service, the method including: acquiring, with a server device, information on a communication standard and a service that are being used and position information from a vehicle; creating, in the server device, a service map indicating a communication standard and a service that are usable in a communication area, at least partly based on the information on the communication standard and the service and the position information; and controlling, with the server device, content of a service provided to the vehicle using the service map.

With the service providing system, the service providing method, and the vehicle according to the above aspects, the content of the service provided to the vehicle is controlled using the service map indicating the communication standard and the service that are usable in the communication area. Therefore, it is possible to stably provide the service to the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating a configuration of a service providing system according to an embodiment of the invention;
FIG. 2 is a block diagram illustrating a configuration of a vehicle shown in FIG. 1;
FIG. 3 is a block diagram illustrating a configuration of a server device shown in FIG. 1;
FIG. 4 is a diagram illustrating an example of a service map stored in a service map database shown in FIG. 3; and
FIG 5 is a timing chart illustrating a process of creating the service map shown in FIG 4.

### DETAILED DESCRIPTION OF EMBODIMENT

Hereinafter, a configuration of a service providing system according to an embodiment of the invention will be described with reference to the drawings.

### Overall Configuration

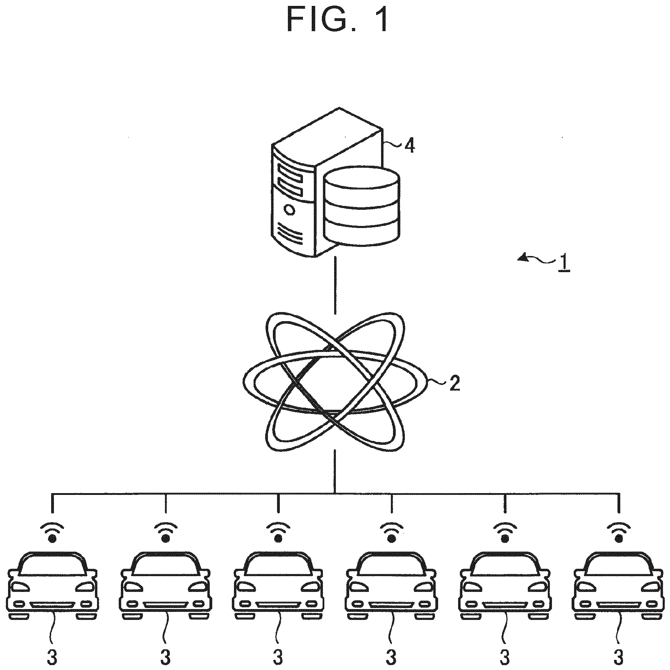

First, an overall configuration of the service providing system according to the embodiment of the invention will be described with reference to FIG. 1.

FIG. 1 is a schematic diagram illustrating the configuration of the service providing system according to the embodiment of the invention. As shown in FIG. 1, a service providing system 1 according to the embodiment of the invention is a system in which the server device 4 provides a service to vehicles 3 via a telecommunication line 2 such as the Internet and a mobile network. The service providing system 1 includes the vehicles 3 and a server device 4 as main components. Here, the service provided to the vehicles 3 by the server device 4 is a service that can be provided via the telecommunication line 2, and examples of the service include autonomous driving control, driving assistance, information provision (agent, operator service, navigation, etc.), and entertainment (streaming, etc.).

### Configuration of Vehicle

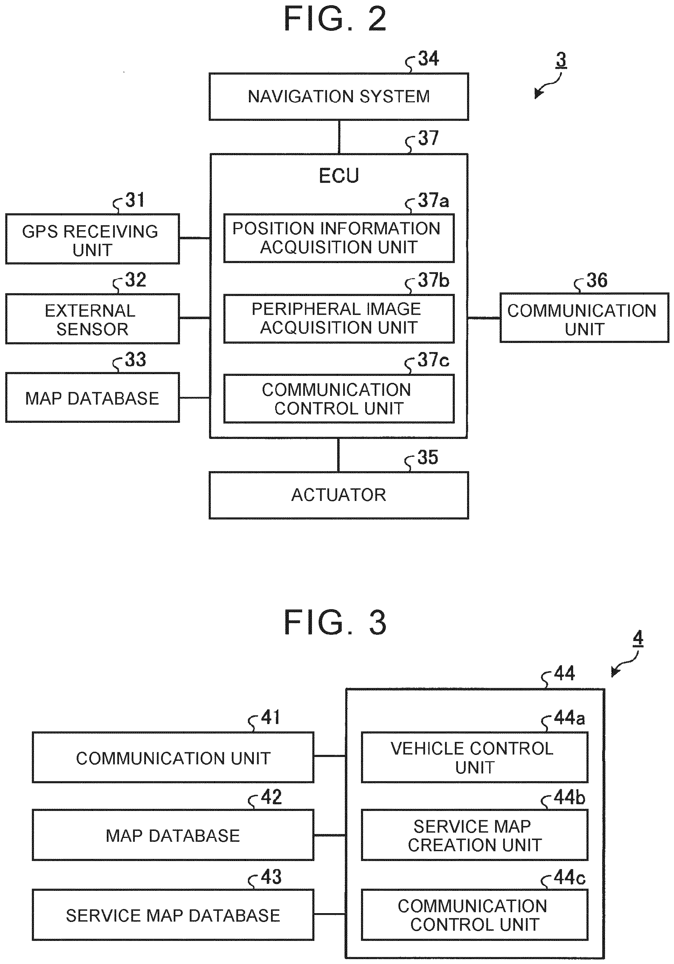

Next, the configuration of the vehicle 3 will be described with reference to FIG. 2.

FIG. 2 is a block diagram illustrating the configuration of the vehicle 3 shown in FIG. 1. As shown in FIG. 2, the vehicle 3 includes a Global Positioning System (GPS) receiving unit 31, an external sensor 32, a map database 33, a navigation system 34, an actuator 35, a communication unit 36, and an electronic control unit (ECU) 37.

The GPS receiving unit 31 functions as a position measuring unit that measures a position of the vehicle 3. The GPS receiving unit 31 receives signals from three or more GPS satellites to measure the position (for example, latitude and longitude) of the vehicle 3. The GPS receiving unit 31 outputs information on the measured position of the vehicle 3 to the ECU 37. The vehicle 3 may use position information of fixed obstacles such as a power pole, which is included in map information stored in the map database 33, and detection results of the external sensor 32 to measure the position of the vehicle 3 by simultaneous localization and mapping (SLAM) technology.

The external sensor 32 includes an imaging device, a radar, and a light detection and ranging (LiDAR). The imaging device captures an image of surroundings of the vehicle 3. The imaging device is provided on a back side of a windshield of the vehicle 3 and a rear face of the vehicle 3. The imaging device may be provided on right and left side surfaces of the vehicle 3. The imaging device outputs imaging information obtained by capturing images of scenes in front of and behind the vehicle 3 to the ECU 37. The imaging device may be a monocular camera or a stereo camera. The stereo camera has two imaging units arranged to reproduce binocular disparity. The imaging information of the stereo camera includes information in a depth direction.

The radar detects obstacles around the vehicle 3 using radio waves (for example, millimeter waves). The radar transmits radio waves to the periphery of the vehicle 3 and receives the radio waves reflected by an obstacle so as to detect an obstacle. The radar outputs detected obstacle information to the ECU 37. The obstacles include dynamic obstacles such as bicycles and other vehicles, besides the above-mentioned fixed obstacles. The LiDAR detects obstacles around the vehicle 3 using light. The LiDAR irradiates light to the periphery of the vehicle 3 and receives the light reflected by an obstacle to measure a distance to a reflection point, thereby detecting the obstacle. The LiDAR outputs the detected obstacle information to the ECU 37. It is not necessarily required to provide both the LiDAR and the radar.

The map database 33 is a database that stores map information. The map database 33 is contained in a storage device such as a hard disk drive (HDD) mounted on the vehicle 3. The map database 33 can be connected to the server device 4 by wireless communication via the communication unit 36. The map database 33 periodically updates the map information using the latest map information stored in the server device 4. The map information includes version information, road position information (position information for each lane), road shape information (whether curves or straight roads, curvatures of curves, etc.), road width information (lane width information), speed limit information for each road, and image information (three-dimensional information) around roads. The map information also includes intersection and branch point position information, stop line position information, pedestrian crossing position information, and traffic light position information. The map information may include road gradient information and road cant information. The map information may further include position information and shape information of fixed obstacles such as curbs, power poles, poles, guardrails, walls, and buildings. The map information may include position information and shape information of road surface painting such as characters and marks drawn on the road surfaces. The road surface painting may include manholes. The map information may include information on signboards provided above the road and information on signs provided on the roadside.

The navigation system 34 calculates by a known method a target route from a current position of the vehicle 3 to a destination based on the preset destination, the position of the vehicle 3 measured by the GPS receiving unit 31, and the map information in the map database 33, and provides a route guidance along the target route. The destination is set by an occupant of the vehicle 3 operating an input button (or touch panel) included in the navigation system 34.

The actuator 35 is a device that performs traveling control of the vehicle 3. The actuator 35 includes a throttle valve actuator, a brake actuator, and a steering actuator. The throttle valve actuator controls the amount of air supplied to an engine (throttle valve opening) in accordance with a control signal from the ECU 37 and controls a drive force of the vehicle 3. When the vehicle 3 is a hybrid vehicle, a control signal from the ECU 37 is input to a motor serving as a power source to control the drive force, in addition to the amount of air supplied to the engine. When the vehicle 3 is an electric vehicle, a control signal from the ECU 37 is input to a motor serving as a power source to control the drive force. The motor serving as the power source in these cases constitutes the actuator 35. The brake actuator controls a brake system in accordance with a control signal from the ECU 37 to control a braking force applied to wheels of the vehicle 3. The steering actuator controls driving of an assist motor that controls steering torque in an electric power steering system in accordance with a control signal from the ECU 37.

The communication unit 36 is composed of a wireless communication circuit or the like for wireless communication, and performs information communication with the server device 4 via the telecommunication line 2. The communication unit 36 may perform vehicle-to-vehicle communication with other vehicles capable of vehicle-to-vehicle communication. Moreover, the communication unit 36 may perform road-to-vehicle communication with a roadside transmitter/receiver provided along the road.

The ECU 37 is an electronic control unit having a central processing unit (CPU), a read-only memory (ROM), a random access memory (RAM), a controller area network (CAN) communication circuit, and the like. In the embodiment, the ECU 37 loads a computer program stored in the ROM into the RAM, and executes the computer program loaded in the RAM with the CPU, thereby functioning a position information acquisition unit 37a, a peripheral image acquisition unit 37b, and a communication control unit 37c.

The position information acquisition unit 37a acquires the position information of the vehicle 3 using the GPS receiving unit 31. The peripheral image acquisition unit 37b acquires a peripheral image of the vehicle 3 using the external sensor 32. The communication control unit 37c controls information communication with the server device 4 via the telecommunication line 2.

### Configuration of Server Device

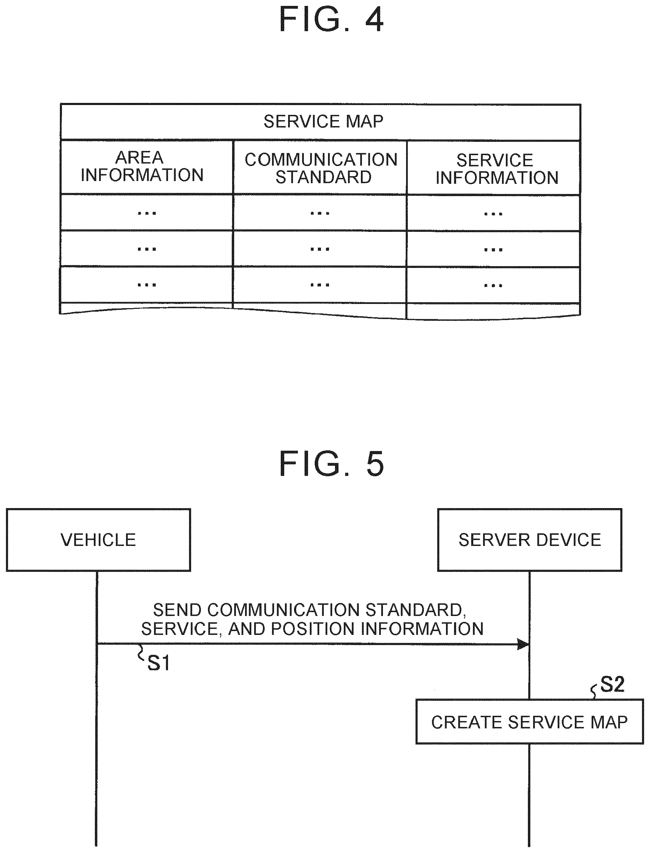

Next, a configuration of the server device 4 will be described with reference to FIGS. 3 to 5. FIG. 3 is a block diagram illustrating the configuration of the server device 4 shown in FIG. 1. FIG. 4 is a diagram illustrating an example of a service map stored in the service map database 43 shown in FIG. 3. FIG. 5 is a timing chart illustrating a process of creating the service map shown in FIG. 4.

As shown in FIG. 3, the server device 4 includes a communication unit 41, a map database 42, a service map database 43, and a server device body 44.

The communication unit 41 is composed of a wireless communication circuit or the like for wireless communication, and performs information communication with the vehicle 3 via the telecommunication line 2.

The map database 42 is a database that stores the map information described above.

The service map database 43 stores a service map indicating communication standards and services that can be used in each communication area (a map of areas where the services can be used without problems). Specifically, as shown in FIG. 4, the service map includes position information of communication areas (area information) and information on communication standards and services that can be used in each communication area. Here, examples of the communication standards include the third generation mobile communication system (3G), the fourth generation mobile communication system (4G), the fifth generation mobile communication system (5G), Wi-Fi (registered trademark), and the like. The service map may include information on strengths (communication speeds) of the communication standards and information on dates and times of update.

The server device body 44 is composed of a known information processing device, and functions as a vehicle control unit 44a, a service map creation unit 44b, and a communication control unit 44c by executing the computer program with an internal arithmetic processing device. The vehicle control unit 44a controls a service provided to the vehicle 3 via the telecommunication line 2 based on the service map stored in the service map database 43. The service map creation unit 44b creates a service map by acquiring from the vehicle 3 information on the communication standard and the service that are being used and the position information, as in steps S1 and S2 shown in FIG. 5. For creating the service map, whether the service has been used without problems may be determined based on comparison with a predetermined threshold, that is, for example, based on whether requirements set for each service (type of communication standard and communication speed with which the service can be used without problems) are satisfied. Moreover, whether the service has been used without problems may be determined based on, for example, feedback from users. Furthermore, all or part of the service map may be created by the vehicle 3 or a roadside device and transmitted to the server device 4. The communication control unit 44c controls information communication with the vehicle 3 via the telecommunication line 2.

As described above, in the service providing system 1 according to the embodiment of the invention, the service map creation unit 44b acquires from the vehicle 3 the information on the communication standard and the service that are being used and the position information, so as to create the service map indicating the communication standard and the service that can be used in each area, and the vehicle control unit 44a controls content of the service provided to the vehicle 3 using the service map created by the service map creation unit 44b. With this configuration, for example, when the vehicle 3 is traveling in an area where the autonomous driving control cannot be performed, an alternative driving control process can be performed. Also, when the vehicle 3 is traveling in an area where videos cannot be played, text information can be sent to the vehicle 3, etc. Thus, it is possible to stably provide the service to the vehicle 3 in accordance with the communication condition of the telecommunication line.

Note that when it is determined that the vehicle 3 is traveling in an area where the autonomous driving control cannot be performed based on the service map, the vehicle control unit 44a may notify the vehicle 3 that the autonomous driving control is not performed. With this configuration, in an area where the autonomous driving control cannot be performed, it is possible to switch the control to manual driving, thereby improving the safety of the autonomous driving control. In this case, the ECU 37 may perform the autonomous driving control using the road information acquired in advance and information on surroundings of the vehicle 3 in response to notification from the server device 4 that the autonomous driving control is not performed. With this configuration, the autonomous driving control can be continuously performed even in an area where the communication standard necessary for the autonomous driving control cannot be used. Note that whether the autonomous driving control is continuously performed may be determined by a driver of the vehicle 3. Further, a safety-focused setting may be adopted such that the autonomous driving control is not performed when the service map cannot be updated or when a predetermined time or more has passed from the date and time of the last update of the service, for example. Moreover, in a place where a predetermined service cannot be used based on the service map, the predetermined service may be continued to be provided using road information and environmental information acquired in advance.

Although the embodiment to which the invention made by the present inventors is applied has been described above, the invention is not limited by the description and the drawings regarding the embodiment, which constitute a part of the disclosure. For example, in the embodiment, the server device 4 refers to the service map to control the content of the service provided to the vehicle 3. However, the vehicle 3 may acquire the service map from the server device 4 to control the service content. Thus, other embodiments, examples, operational techniques, and the like that are made by those skilled in the art based on the embodiment are all included in the scope of the invention.

## Claims

1. A service providing system comprising a server device (4) configured to provide a service to a vehicle (3) via a telecommunication line, the server device (4) including:
a service map creation unit (44b) configured to acquire, from the vehicle (3), information on a communication standard and a service that are being used and position information, and to create a service map indicating a communication standard and a service that are usable in a communication area, at least partly based on the information on the communication standard and the service and the position information; and
a vehicle control unit (44a) configured to control content of the service provided to the vehicle (3) using the service map created by the service map creation unit (44b).

2. The service providing system according to claim 1, wherein the vehicle control unit (44a) is configured to notify the vehicle that autonomous driving control is not performed when it is determined, based on the service map, that the vehicle (3) is located in a communication area where a communication standard necessary for the autonomous driving control is not allowed to be used.

3. The service providing system according to claim 2, wherein the server device (4) is configured to provide the service to the vehicle (3) provided with a control unit, the control unit performing, in response to notification from the server device (4) that the autonomous driving control is not performed, the autonomous driving control using road information acquired in advance and information on surroundings of the vehicle.

4. The service providing system according to claim 1, wherein the service map creation unit (44b) is configured to receive, from the vehicle (3), information on a communication speed of the communication standard that is being used.

5. The service providing system according to claim 1, wherein:
the service includes autonomous driving control of the vehicle (3); and
the server device (4) is configured to notify the vehicle (3) that the autonomous driving control is not performed when it is determined, based on the service map, that the vehicle (3) travels in an area where the autonomous driving control is not allowed to be performed.

6. The service providing system according to claim 1, wherein the server device (4) is configured to determine a service that is allowed to be provided in the communication area, based on the communication standard in the communication area and a communication speed of the communication standard.

7. The service providing system according to claim 1, wherein the server device (4) is configured to receive, from the vehicle (3), feedback on whether the service has been allowed to be performed in the communication area, and determine the service that is allowed to be provided in the communication area based on the feedback.

8. The service providing system according to claim 1, wherein the service map creation unit (44b) is configured to determine a communication area for which the service map has not been updated for a predetermined period or more as an area where the service is not allowed to be provided.

9. A vehicle comprising:
a position information acquisition unit (37a) configured to acquire position information of the vehicle;
a communication unit (36) configured to communicate with a server device (4) outside the vehicle to receive information on a service provided from the server device (4); and
a control unit (37) configured to acquire information on a communication standard that is being used by the communication unit (36), wherein
the control unit is configured to create a service map indicating a communication standard and a service that are usable in an area where the vehicle has traveled based on the position information and the information on the communication standard, and to transmit the service map to the server device (4) through the communication unit (36).

10. A method for providing a service, the method comprising:
acquiring, with a server device (4), information on a communication standard and a service that are being used and position information from a vehicle (3);
creating, in the server device (4), a service map indicating a communication standard and a service that are usable in a communication area, at least partly based on the information on the communication standard and the service and the position information; and
controlling, with the server device (4), content of a service provided to the vehicle (3) using the service map.
